# EUROPÄISCHE PATENTANMELDUNG

(11) **EP 1 279 462 A2**
(43) Veröffentlichungstag der Anmeldung: **29.01.2003**
(21) Anmeldenummer: 02015311.0
(22) Anmeldetag: 10.07.2002
(51) Int. Cl.: B23P 25/00, B21B 27/00, B41N 7/00, B22D 11/128, B23K 25/00, C21D 9/38

(54) **Verfahren und Vorrichtung zur Oberflächenbearbeitung eines, vorzugsweise metallischen, Werkstückes**

(30) Priorität: 25.07.2001 AT 11542001
(71) Anmelder: MCE VOEST GmbH & Co., 4031 Linz (AT)
(72) Erfinder: Haubner, Johann, 4050 Linz (AT)
(74) Vertreter: VA TECH Patente GmbH & Co

(57) **Zusammenfassung**

Die Erfindung betrifft eine Vorrichtung sowie ein Verfahren zur Oberflächenbearbeitung eines, vorzugsweise metallischen, Werkstücks, insbesondere einer Walze oder Rolle, wobei ein Beschichtungsmaterial auf die Oberfläche des Werkstücks aufgetragen wird und dabei zumindest teilweise die neue Oberfläche des Werkstückes bildet. Dabei wird das Beschichtungsmaterial bei der Auftragung auf eine Temperatur über Raumtemperatur erwärmt, und die durch das aufgetragene Beschichtungsmaterial gebildete Oberfläche des Werkstücks nach der Auftragung in dem erwärmten Zustand bearbeitet.

## Beschreibung

Die Erfindung betrifft eine Vorrichtung sowie ein Verfahren zur Oberflächenbearbeitung eines, vorzugsweise metallischen, Werkstücks, insbesondere einer Walze oder Rolle, wobei ein Beschichtungsmaterial auf die Oberfläche des Werkstücks aufgetragen wird und dabei zumindest teilweise die neue Oberfläche des Werkstückes bildet.

Die Herstellung von Walzen oder Rollen, wie sie beispielsweise in einer Stranggussanlage oder einer Druckmaschine, vorzugsweise zur Herstellung von Geldnoten, verwendet werden, ist aufwendig und entsprechend kostenintensiv. Durch die hohen Anforderungen an die Oberflächengüte des Produktes sind spezielle Wärmebehandlungsverfahren und mechanische Bearbeitungsschritte nötig. Die Oberfläche zeichnet sich weiters zumeist dadurch aus, dass sie aus einem säurebeständigen und verschleißfesten Material besteht. Dabei werden beispielsweise verschleißfeste austenitische Schichten auf einen Walzenkern aufgebracht.

Im Stand der Technik ist es, in diesem Zusammenhang, üblich auf Walzenkerne eine martensitische oder austenitische Schicht aufzuschweißen und nachfolgend eine Weichglühung durchzuführen, da nur in diesem Fall eine adäquate mechanische Weiterbearbeitung der aufgeschweißten Oberfläche möglich ist. Andernfalls wäre durch die hohe Härte des aufgeschweißten Materials ein beträchtlicher Werzeugverschleiß, beispielsweise beim Abdrehen der Oberfläche, zu erwarten.

Es ist deshalb eine Aufgabe der vorliegenden Erfindung ein Verfahren nach dem Oberbegriff des Anspruchs 1 sowie eine Vorrichtung zur Durchführung des Verfahrens nach dem Oberbegriff des Anspruchs 8 weiter zu entwickeln, durch welche eine kostengünstigere Herstellung solcher Bauteile durchführbar ist.

Die erfindungsgemäße Aufgabe wird entsprechend dem Verfahren nach dem kennzeichnenden Teil des Anspruch 1, sowie entsprechend der Vorrichtung nach dem kennzeichnenden Teil des Anspruchs 8 gelöst.

Durch die Bearbeitung der erwärmten Oberfläche erfolgt ein geringerer Verschleiß des Bearbeitungswerkzeuges, beispielsweise des Drehmessers einer Drehbank. Das ist, vereinfacht ausgedrückt, dadurch erklärbar, dass sich der zu bearbeitende Werkstoff bei erhöhten Temperaturen weicher, und deshalb einer mechanischen Bearbeitung besser zugänglich, erweist. Bei Einsatz entsprechender Werkstoffe, insbesondere von Hartmetallen oder Schneidkeramiken, führt das zu einem deutlich niedrigeren Verschleiß des Werkzeuges.

Der Begriff Fixieren umfasst definitionsgemäß jede Beschränkung der Bewegung eines Körpers, also insbesondere ein Einspannen, ein Befestigen, ein Festmachen, ein Lagern oder äquivalente Begriffe.

Um den Wärmeverlust des vor der Bearbeitung erwärmten Werkstücks zu minimieren werden nach einer bevorzugten Ausführungsform Warmhalteeinrichtungen, beispielsweise Wärmehauben, eingesetzt.

Nach einer bevorzugten Ausführungsform der Erfindung wird das Werkstück auf einer Werkzeugmaschine, insbesondere einer Drehbank, fixiert, insbesondere eingespannt, und nachfolgend an der Oberfläche bearbeitet, insbesondere abgedreht, wobei das Werkstück vor der Bearbeitung - unabhängig von einer allfälligen Erwärmung durch die Bearbeitung selbst - an der zu bearbeitenden Oberfläche auf eine Temperatur über Raumtemperatur erwärmt, und die Oberfläche des Werkstückes in erwärmten Zustand bearbeitet wird.

Nach einer bevorzugten Ausführungsform des erfindungsgemäßen Verfahrens erfolgt die Erwärmung des Werkstücks im fixierten Zustand auf der Werkzeugmaschine, insbesondere unmittelbar vor der mechanischen Bearbeitung.

Durch die nach dieser Ausführungsform unmittelbar vor Ort, an der Werkzeugmaschine, zu erfolgende Erwärmung der Oberfläche des Werkstückes, wird gegenüber dem Stand der Technik eine nennenswerte Zeitersparnis bei gleichzeitiger Minimierung des Energieeinsatzes verwirklicht. Auf eine vorbereitende Weichglühung des Werkstückes kann verzichtet werden.

Gegenüber einer Verfahrensweise entsprechend dem beschriebenen Stand der Technik, der die mechanische Bearbeitung des Werkstücks im weichgeglühten Zustand lehrt, konnten die Herstellungskosten des Erzeugnisses um bis zu 40 % gesenkt werden.

Nach dem erfindungsgemäßen Verfahren können nicht nur metallische sondern auch nichtmetallische, beispielsweise oxidische oder polymere, Werkstoffe behandelt werden.

Mit dem Begriff der mechanischen Bearbeitung sind erfindungsgemäß sämtliche dem Fachmann bekannte Bearbeitungmöglichkeiten, insbesondere die zerspanende Bearbeitung, beispielsweise durch Drehen oder Drehfräsen, umfasst.

Die Oberfläche des Werkstückes wird auf eine Temperatur von über Raumtemperatur, beispielsweise über 40 - 50 °C oder 60°C erwärmt.

Nach einer besonderen Ausführungsform des erfindungsgemäßen Verfahrens wird die Oberfläche des fixierten Werkstückes, im Vorfeld der mechanischen Bearbeitung, zumindest teilweise auf eine Temperatur von zumindest 100 °C, vorzugsweise zumindest 150 °C, besonders bevorzugt zumindest 250°C oder 350 °C, erwärmt und umgehend bearbeitet.

In Versuchen hat sich gezeigt, dass bei diesen Temperaturen, bei Anwendung der aus dem Stand der Technik bekannten Verfahren zur mechanischen Bearbeitung, hinsichtlich der Verschleißbeständigkeit, unter Berücksichtigung der Warmfestigkeit des Werkzeuges, ein besonders vorteilhafter Betrieb möglich ist.

Nach derzeitigem Entwicklungsstand der Bearbeitungswerkzeuge ist, hinsichtlich wirtschaftlicher Überlegungen, eine Erwärmung der zu bearbeitenden Oberflächen auf Temperaturen bis 650 °C, vorzugsweise bis 500 °C möglich. Da oberhalb dieser Temperaturen die Warmfestigkeit konventioneller Werkzeuge stark abnimmt, ist eine Bearbeitung nur beschränkt möglich. Es ist jedoch abzusehen, dass durch die Weiterentwicklung auf dem Gebiet der Werkstofftechnik möglicherweise bald höhere Bearbeitungstemperaturen ermöglicht werden.

Nach einer weiteren besonderen Ausführungsform des erfindungsgemäßen Verfahrens wird vor der mechanischen Oberflächenbearbeitung Material, beispielsweise in Form einer Schicht, auf die Oberfläche des fixierten Werkstück aufgebracht, das nach einer besonderen Ausführungsform zumindest teilweise die weiterzubearbeitende Oberfläche des Werkstückes bildet.

Insbesondere nach einem heißen Auftragen von Material auf die Oberfläche eines Werkstückes, insbesondere durch Aufschweißen, war bislang vor der mechanischen Oberflächenbearbeitung des Werkstückes ein Weichglühen der Oberfläche des Werkstückes in einem Wärmebehandlungsofen erforderlich. Nach dem erfindungsgemäßen Verfahren entfällt diese aufwendige Wärmebehandlung.

Diese Ausführungsform der Erfindung findet insbesondere bei der Erzeugung von Walzen oder Rollen Anwendung, die durch besondere Oberflächenmaterialien gekennzeichnet sind. Dabei werden beispielsweise metallische oder keramische Schichten auf einen Walzenkern aufgebracht, die nach dem Stand der Technik nur sehr schwierig zu bearbeiten sind.

Nach verschiedenen bevorzugten Ausführungsformen werden besonders harte und/oder verschleißfeste und/oder korrosionsbeständige Schichten aufgebracht.

Nach dem erfindungsgemäßen Verfahren gelingt die mechanische Bearbeitung harter und/oder verschleißfester Schichten bei einem geringen Verschleiß des Bearbeitungswerkzeuges.

Nach einer weiteren besonderen Ausführungsform des erfindungsgemäßen Verfahrens erfolgt die Erwärmung der zu bearbeitenden Oberfläche des Werkstückes zumindest teilweise durch die, durch die Aufbringung des Materials, zugeführte Wärme.

Im Falle des Aufschweißens einer Oberflächenschicht handelt es sich dabei um die eingebrachte Schweißenergie. Durch den Aufschweißvorgang selbst wird die Oberfläche um die Aufschweißung herum, bzw. das Aufschweißgut selbst, erwärmt.

Nach einer weiteren besonderen Ausführungsform des erfindungsgemäßen Verfahrens erfolgt die Bearbeitung der Oberfläche des Werkstücks unmittelbar nach und/oder zumindest teilweise zeitlich überlappend mit dem Vorgang der - von der folgenden Bearbeitung unabhängigen - Erwärmung der Oberfläche, insbesondere durch ein warmes Aufbringen von Material, vorzugsweise durch Aufschweißen.

Um beispielsweise den Wärmeeintrag durch den Schweißvorgang effektiv zu nützen, wird in einer vorteilhaften Ausführung des erfindungsgemäßen Verfahrens die mechanische Bearbeitung unmittelbar nach dem Aufschweißvorgang durchgeführt.

Sollte das nach der Art der mechanischen Bearbeitung möglich sein, ist eine zeitliche Überlappung des Aufschweiß- mit dem Bearbeitungsvorgang besonders vorteilhaft, da auf diese Weise der Wärmeverlust der Oberfläche - durch Konvektion, Strahlung oder Wärmeleitung - vor der mechanischen Bearbeitung minimiert wird.

Nach einer weiteren besonderen Ausführungsform des erfindungsgemäßen Verfahrens wird die zu bearbeitende Oberfläche des Werkstücks, insbesondere im fixierten Zustand an der Werkzeugmaschine, flächig und/oder punktuell, beispielsweise über einen Laserstrahl und/oder eine induktive Erwärmung, erwärmt.

Nach einer weiteren Ausführungsform des erfindungsgemäßen Verfahrens erfolgt die mechanische Oberflächenbearbeitung durch Zerspanen, beispielsweise durch Drehen oder Drehfräsen.

Die Erfindung ist weiters durch eine Vorrichtung zur Bearbeitung eines, vorzugsweise metallischen, Werkstückes, insbesondere zur Durchführung des erfindungsgemäßen Verfahrens, gekennzeichnet.

Nach einer besonderen Ausführungsform der Erfindung ist eine Werkzeugmaschine vorgesehen, auf der ein Werkstück fixierbar und nachfolgend an der Oberfläche bearbeitbar ist, und wobei im Bereich der Werkzeugmaschine, insbesondere unmittelbar an der Werkzeugmaschine, ein Mittel zur Erwärmung der Oberfläche des Werkstückes auf eine Temperatur über Raumtemperatur angeordnet ist, durch welches die Oberfläche des fixierten Werkstückes, vor ihrer mechanischen Bearbeitung, erwärmbar ist.

Nach einer besonderen Ausführungsform der erfindungsgemäßen Vorrichtung ist die Oberfläche des fixierten Werkstückes vor der mechanischen Bearbeitung durch das Mittel zur Erwärmung der Oberfläche zumindest teilweise auf eine Temperatur von zumindest 100 °C, vorzugsweise zumindest 150 °C, besonders bevorzugt zumindest 250°C, 350 °C oder 450 °C, erwärmbar und im erwärmten Zustand bearbeitbar.

Nach einer weiteren besonderen Ausführungsform der erfindungsgemäßen Vorrichtung ist die Werkzeugmaschine als Dreh- oder Drehfräsbank ausgeführt.

Nach einer weiteren besonderen Ausführungsform der erfindungsgemäßen Vorrichtung weist das Mittel zur Erwärmung der Oberfläche des Werkstückes eine Vorrichtung zum, gegebenenfalls warmen, Auftragen, insbesondere Aufschweißen, von Material auf das Werkstück auf.

Nach einer besonderen Ausführungsform der erfindungsgemäßen Vorrichtung handelt es sich dabei um eine Aufschweiß-Vorrichtung. Durch die Schweißenergie wird eine entsprechende Wärmemenge in die, gegebenenfalls durch die Aufschweißung entstandene, Oberfläche des Werkstückes, eingebracht und die Oberfläche des Werkstücks vor der Bearbeitung entsprechend erwärmt.

Nach einer bevorzugten Ausführungsform der erfindungsgemäßen Vorrichtung weist das Mittel zur Erwärmung der Oberfläche des Werkstückes einen Laser oder eine induktive Heizung auf.

Auch andere äquivalente Mittel zur Erwärmung, beispielsweise über elektromagnetische Strahlung, sind anwendbar.

Im Folgenden wird ein nicht einschränkendes Ausführungsbeispiel des erfindungsgemäßen Verfahrens, sowie der erfindungsgemäßen Vorrichtung erläutert:

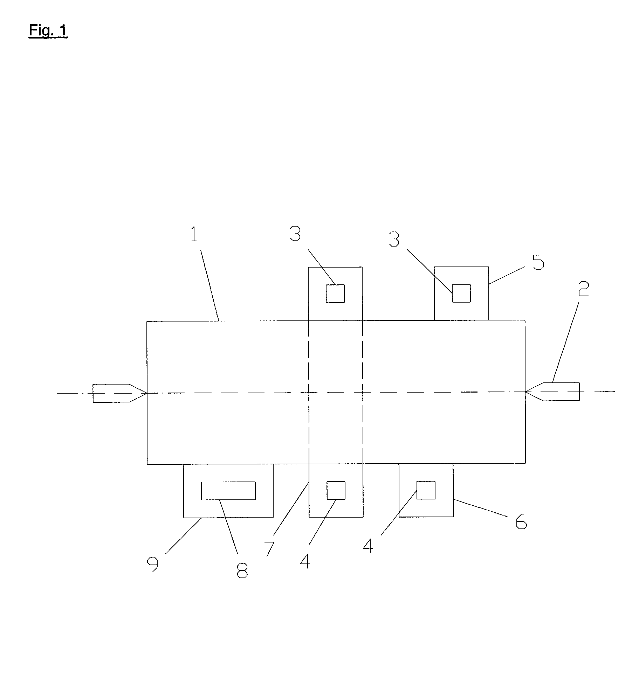

In Fig. 1 sind verschiedene, nicht einschränkende, Varianten der Ausführung der erfindungsgemäßen Vorrichtung dargestellt.

Das beschriebene Verfahren dient beispielsweise zur Herstellung von spez. Rollen oder Walzen.

Ein Grundmaterial, beispielsweise 42CrMo4, wird gesägt, zentriert, und in einer Zerspanungsmaschine auf einen vorbestimmten Außendurchmesser abgedreht. Nach einer Oberflächen-Reinigung erfolgt eine Vorwärmung, insbesondere auf 230-260 °C, und schließlich das Schweißen des Außenmantels auf einer kombinierten Schweiß- und Werkzeugmaschine. Dabei wird unter Berücksichtigung der verschiedenen Schweißparameter, insbesondere der Menge an Abdeckpulver, Schweißpulver und Schweißdraht, sowie der Drehzahl des rotierenden Werkstückes und der Stromstärke der Schweißvorrichtung eine verschleißfeste, insbesondere austenitische oder martensitische, Materialschicht (Schichtdicke: 4-8 mm) auf das Werkstück aufgebracht. Das Werkstück wird hierzu in entsprechend temperaturbeständige, insbesondere hydraulische, Spannbacken eingespannt.

Die mechanische Bearbeitung des Werkstückes erfolgt unmittelbar nach Aufbringung der Aufschweißung durch ein teilweises Abdrehen oder Abfräsen der warmen aufgeschweißten Oberflächenschicht. Bei der mechanischen Bearbeitung muß die Schrumpfung des warmen Werkstückes beachtet werden.

Danach wird das Werkstück aus der Werkzeugmaschine ausgespannt und mittels kontrollierter Luftkühlung auf Raumtemperatur gekühlt. Es folgt eine Endbearbeitung.

Entsprechend einer besonderen Ausführungsform der erfindungsgemäßen Vorrichtung ist das Bearbeitungswerkzeug unabhängig von dem Mittel zur Erwärmung der Oberfläche ausgeführt, und kann, gegebenenfalls unabhängig von diesem, gesteuert werden. Dabei ist das Mittel zur Erwärmung nach einer bevorzugten Ausführungsform an der Werkzeugmaschine angeordnet, beispielsweise an dieser montiert. In diesem Zusammenhang ist denkbar, das Werkzeug 3 zur Bearbeitung des Werkstückes 1, sowie das Mittel 4 zur Erwärmung jeweils auf einem eigenen Schlitten 5, 6 an der Werkzeugmaschine 2 anzubringen.

Nach einer weiteren Ausführungsform werden das Werkzeug 3 zur Bearbeitung sowie das Mittel 4 zur Erwärmung auf einem gemeinsamen Schlitten 7 angeordnet, wodurch die Vorrichtung wesentlich vereinfacht werden kann.

Nach einer weiteren Ausführungsform werden das Bearbeitungswerkzeug 3 sowie das Mittel 4 zur Erwärmung auf einem gemeinsamen Schlitten 9 angeordnet, wobei das Bearbeitungswerkzeug und das Mittel zur Erwärmung in einer kombinierten Einrichtung 8 angebracht sind. In Fig.1 sind besagte Varianten vereinfachend an einem Werkstück nebeneinander dargestellt.

Entsprechend einer besonders bevorzugten Ausführungsform handelt es sich bei dem Mittel zur Erwärmung um eine Vorrichtung zum Aufschweißen einer Schicht.

Weitere Mittel zur Erwärmung umfassen beispielsweise aus dem Stand der Technik bekannte Heizeinrichtungen, insbesondere zur direkten, indirekten oder induktiven Erwärmung. Entsprechend einer weiteren besonders bevorzugten Ausführungsform handelt es sich bei dem Bearbeitungswerkzeug um ein Drehmesser oder einen Drehfräser.

Um den Wärmeverlust nach der Erwärmung zu minimieren, können Vorrichtungen zur Wärmeerhaltung, beispielsweise Wärmehauben, eingesetzt werden.

## Patentansprüche

1. Verfahren zur Oberflächenbearbeitung eines, vorzugsweise metallischen, Werkstücks, insbesondere einer Walze oder Rolle, wobei ein Beschichtungsmaterial auf die Oberfläche des Werkstücks aufgetragen wird und dabei zumindest teilweise die neue Oberfläche des Werkstückes bildet, **dadurch gekennzeichnet, dass** das Beschichtungsmaterial bei der Auftragung auf eine Temperatur über Raumtemperatur erwärmt wird, und die durch das aufgetragene Beschichtungsmaterial gebildete Oberfläche des Werkstücks nach der Auftragung in dem erwärmten Zustand bearbeitet wird.

2. Verfahren nach Anspruch 1, **dadurch gekennzeichnet, dass** das Beschichtungsmaterial durch Aufschweißen auf das Werkstück aufgebracht wird.

3. Verfahren nach Anspruch 1 oder 2, **dadurch gekennzeichnet, dass** die Erwärmung der zu bearbeitenden Oberfläche des Werkstückes zumindest teilweise durch die bei der Aufbringung des Materials zugeführte bzw. entstehende Energie, insbesondere die Schweißenergie, erfolgt.

4. Verfahren nach einem oder mehreren der Ansprüche 1 bis 3, **dadurch gekennzeichnet, dass** das Beschichtungsmaterial bei der Auftragung auf das Werkstück zumindest teilweise auf eine Temperatur von zumindest 100 °C, vorzugsweise zumindest 250 °C, erwärmt wird.

5. Verfahren nach einem oder mehreren der Ansprüche 1 bis 4, **dadurch gekennzeichnet, dass** sowohl die Auftragung des Beschichtungsmaterials auf das Werkstück sowie die nachfolgende Oberflächenbearbeitung des Werkstückes auf einer, bevorzugt auf einer einzigen, Werkzeugmaschine erfolgt.

6. Verfahren nach einem oder mehreren der Ansprüche 1 bis 5, **dadurch gekennzeichnet, dass** die Bearbeitung der Oberfläche des Werkstückes unmittelbar nach und/oder zumindest teilweise zeitlich überlappend mit dem Vorgang der Auftragung des Beschichtungsmaterials auf das Werkstück erfolgt.

7. Verfahren nach einem oder mehreren der Ansprüche 1 bis 6, **dadurch gekennzeichnet, dass** die mechanische Oberflächenbearbeitung durch Zerspanung, beispielsweise durch Drehen oder Drehfräsen, erfolgt.

8. Vorrichtung zur Oberflächenbearbeitung eines, vorzugsweise metallischen, Werkstückes, insbesondere zur Durchführung eines Verfahrens nach einem oder mehreren der Ansprüche 1 bis 7, wobei eine Einrichtung zur Auftragung eines Beschichtungsmateriales auf ein Werkstück vorgesehen ist, **dadurch gekennzeichnet, dass** ein Mittel zum Erwärmen des Beschichtungsmateriales bei der Auftragung auf eine Temperatur über Raumtemperatur und ein Werkzeug zur Bearbeitung der durch das aufgetragene Beschichtungsmaterial gebildeten Oberfläche des Werkstückes in dem erwärmten Zustand vorgesehen sind.

9. Vorrichtung nach Anspruch 8, **dadurch gekennzeichnet, dass** zum Auftragen und Erwärmen des Beschichtungsmaterials eine Aufschweißeinrichtung vorgesehen ist.

10. Vorrichtung nach Anspruch 8 oder 9, **dadurch gekennzeichnet, dass** das Bearbeitungswerkzeug als Teil einer Werkzeugmaschine, insbesondere einer Drehbank oder Drehfräsbank, ausgeführt ist.

11. Vorrichtung nach einem oder mehreren der Ansprüche 8 bis 10, **dadurch gekennzeichnet, dass** die Einrichtung zur Auftragung des Beschichtungsmaterials im Bereich der Werkzeugmaschine, insbesondere unmittelbar an der Werkzeugmaschine neben dem Werkzeug zur Bearbeitung der Oberfläche, angeordnet ist.
